Europäisches Patentamt

European Patent Office

Office européen des brevets

(11) Publication number: **0 141 251**
**B1**

(12) **EUROPEAN PATENT SPECIFICATION**

(45) Date of publication of patent specification: **16.09.87**

(21) Application number: **84111473.9**

(22) Date of filing: **26.09.84**

(51) Int. Cl.⁴: **G 01 M 11/02**

(54) **Method of measuring a spot size of a single-mode fiber.**

(30) Priority: **29.09.83 JP 181318/83**

(43) Date of publication of application:
**15.05.85 Bulletin 85/20**

(45) Publication of the grant of the patent:
**16.09.87 Bulletin 87/38**

(84) Designated Contracting States:
**BE CH DE FR GB IT LI NL**

(56) References cited:
**EP-A-0 077 259**
**DE-A-2 842 316**
**DE-B-2 852 614**

**IEEE JOURNAL ON MICROWAVES, OPTICS AND ACOUSTICS, vol.1, no.1, September 1976, New York; W.A.GAMBLING, D.N.PAYNE, H.MATSMURA, R.B.DYOTT "Determination of core diameter and refractive-index difference of single-mode fibres by observation of far-field pattern" pages 13-17**

**IEEE JOURNAL OF QUANTUM ELECTRONICS, vol.QE-15, no.10, October 1979, New York;**

(73) Proprietor: **SUMITOMO ELECTRIC INDUSTRIES LIMITED**
**No. 15, Kitahama 5-chome Higashi-ku**
**Osaka-shi Osaka 541 (JP)**

(73) Proprietor: **Nippon Telegraph and Telephone Corporation**
**1-6 Uchisaiwaicho 1-chome Chiyoda-ku**
**Tokyo (JP)**

(72) Inventor: **Nishimura, Masayuki c/o Yokohama Works**
**Sumitomo Electric Industries, Ltd. 1, Taya-cho Totsuka-ku Yokohama-shi Kanagawa (JP)**
Inventor: **Suzuki, Shuzo c/o Yokohama Works**
**Sumitomo Electric Industries, Ltd. 1, Taya-cho Totsuka-ku Yokohama Works Kanagawa (JP)**
Inventor: **Tokuda, Masamitsu**
**2023-36, Hori-machi**
**Mito-shi Ibaraki (JP)**

(74) Representative: **Lehn, Werner, Dipl.-Ing. et al Hoffmann, Eitle & Partner Patentanwälte**
**Arabellastrasse 4**
**D-8000 München 81 (DE)**

0 141 251

(56) References cited:
K.KITAYAMA, M.TATEDA, S.SEIKA, N.UCHIDA:
"Determination of Mode Power Distribution in
a Parabolic-Index Optical Fibers: Theory and
Application" pages 1161-1165

## Description

The present invention relates to a method of measuring the spot size (or the mode field radius) of a single-mode optical fiber.

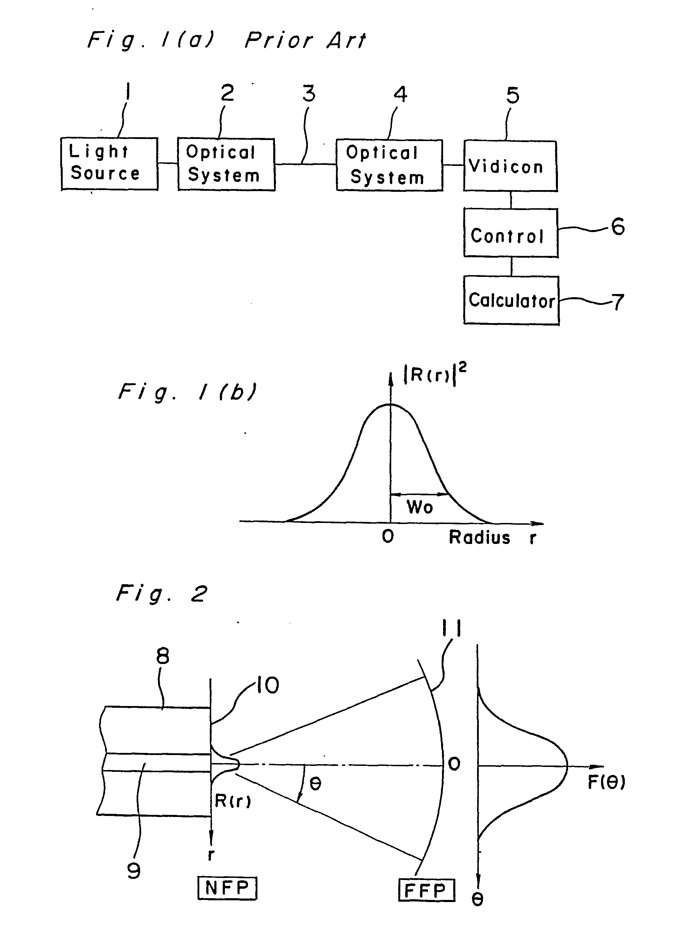

Various methods of measuring the spot size have heretofore been proposed. One of such methods is illustrated in Figure 1(a). In Figure 1(a), a beam to be measured is emitted by a light source 1 and applied through an optical system 2 to an optical fiber 3. The near field pattern (hereinafter referred to as an "NFP") at an end of the optical fiber remote from the optical system 2 is measured directly by an optical system 4 and an infrared vidicon camera 5, an example of the result of such measurement being shown in Figure 1(b). The spot size $w_0$ is determined which is defined by:

i) the radial distance $w_0$ in which NFP is reduced from its maximum to $1/e^2$, wherein e is the base of the natural logarithm; or

$$\text{ii)} \quad w_0{}^2 = \frac{2\int_0^\infty |R(r)|^2 r^3 dr}{\int_0^\infty |R(r)|^2 r dr} \tag{1}$$

wherein $|R(r)|^2$ is NFP, and r is the radius of the optical fiber. Reference numerals 6 and 7 represent a camera control and a computer, respectively. The conventional method is disadvantageous in that measurement errors are liable to occur due to nonlinear photoelectric conversion characteristics of the vidicon camera and the irregular sensitivity of the vidicon camera. Furthermore, since the optical system 5 requires the use of a lens system for enlarging the image, measurement errors also tend to be caused by aberrations of the lenses. The above prior art method therefore fails to make an accurate measurement.

Another method of determining the spot size from the far field pattern (hereinafter referred to as "FFP") is disclosed by Gambling et al. in IEE J. Microwave Opt. Acoust. Vol. 1, p 13, 1976. This method is a simplified method based on the assumption that NFP is a Gaussian distribution. However, this method is subjected to the risk of large measurement errors since NFP of a single-mode optical fiber actually manufactured may vary with the distribution of refractive indexes in the cross section of the fiber, deviating from the Gaussian distribution. The method cannot be applied in principle to the measurement of the spot size based on the equation (1) or the like because NFP is not directly determined.

The present invention has been made in an effort to eliminate the above described drawbacks.

According to the present invention, there is disclosed a method of measuring the spot size of a single-mode optical fiber, comprising the steps of measuring the far field pattern of a beam emitted from an end of the single-mode optical fiber in a range from the radiation angle, at which the far field pattern is maximum, to the radiation angle at which the far field pattern is reduced 25 dB or smaller, calculating the near field pattern from the measured far field pattern by the use of Hankel transform, and determining the spot size from the calculated near field pattern according to a prescribed definition formula. The method of the invention is capable of highly accurate measurement without using an infrared vidicon camera, having the problems of nonlinear photoelectric conversion characteristics and irregular vidicon sensitivity, and a lens system having aberrations. Furthermore, the method can be applied with any definition formula for the determination of the spot size.

The invention is described below with reference to the drawings, in which

Figure 1(a) is a block diagram showing an arrangement for the conventional NFP measuring method;

Figure 1(b) is a diagram showing an example of the result of measurement according to the conventional measuring method;

Figure 2 is a diagram showing the relationship between NFP and FFP;

Figure 3 is a graph showing a calculated example of FFP of a stepped single-mode optical fiber;

Figure 4(a) is a set of graphs showing the relationship between spot size measurement errors and minimum values of the relative power of FFP at the time the maximum radiation angle is varied when FFP is measured, wherein Figure 4(a) is a graph showing the FFP minimum power values at the time the maximum radiation angle is varied and Figure 4(b) is a graph showing the spot size measurement errors at the time the maximum radiation angle is varied; and

Figure 5 is a block diagram illustrative of a measuring system performing a method according to the present invention.

Hereinafter, the present invention will be described in connection with a preferred embodiment.

The relationship between electric field distributions of NFP and FFP of a single-mode optical fiber is expressed as follows according to Kirchhoff's diffraction theory:

$$F(\theta) \alpha \int_0^\infty R(r) J_0(kr\sin\theta) r dr \tag{2}$$

wherein $F(\theta)$ and $R(r)$ are the electric field distributions of FFP and NFP, respectively, $k = 2\pi/\lambda$ ($\lambda$: wavelength), $J_0$ is Bessel function of order 0, and $\theta$ is the radiation angle. The relationship is diagrammatically illustrated in Figure 2 wherein reference numerals 8, 9 and 10 respectively represent an optical fiber, a core, and one end of the optical fiber from which the beam is emitted, and reference numeral 11 represents the plane on which FFP is observed.

From the above equation (2) is derived the following expression, when Hankel transform is used:

$$R(r) \alpha \int_0^\infty F(\theta) J_0(kr\sin\theta)\sin 2\theta d\theta \tag{3}$$

Therefore, $R(r)$ can be determined by determining $F(\theta)$ which can be determined by measuring $|F(\theta)|^2$ which represents FFP. By using the formula (3), $R(r)$ can be determined, and $|R(r)|^2$ which represents NFP can be determined by a calculation. From this NFP, the spot size $w_0$ according to various definitions, particularly one as defined by the formula (1), can be determined.

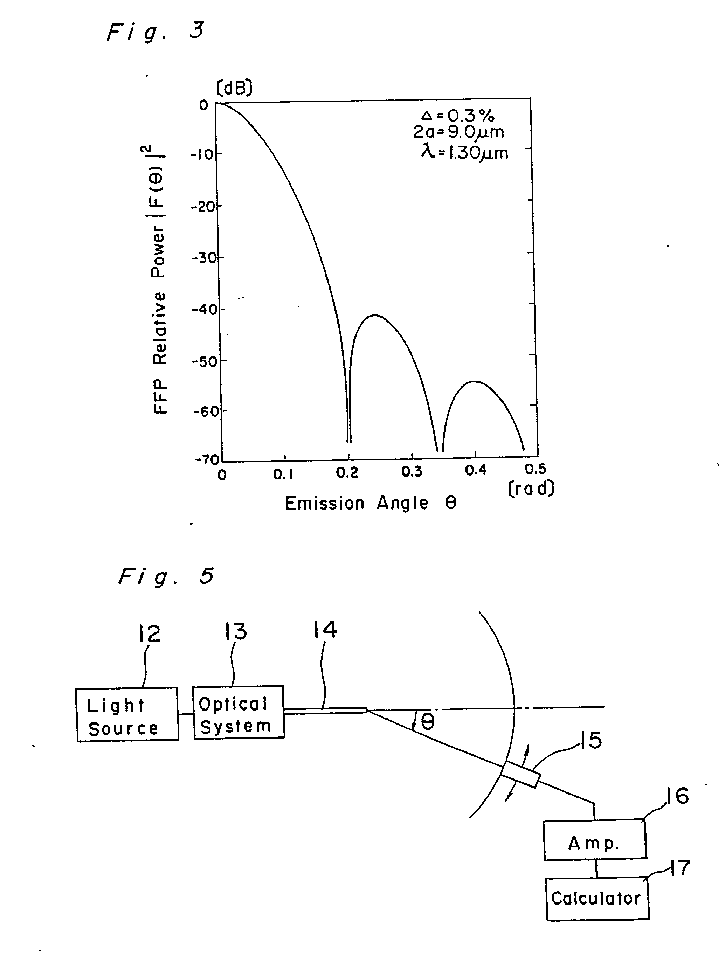

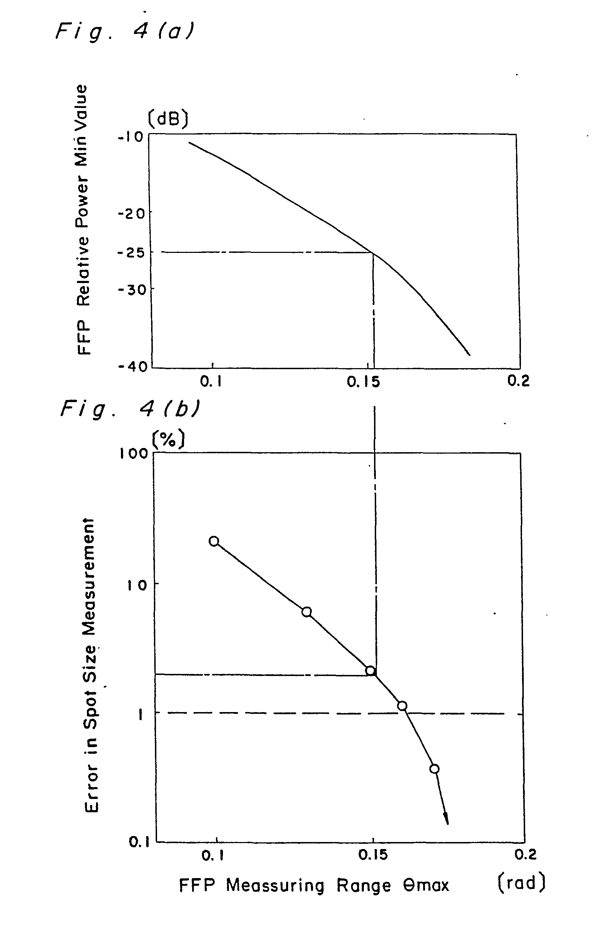

However, FFP ($|F(\theta)|^2$) can only be measured in finite radiation angles $\theta$ because of the reception sensitivity of the measurement system. As is apparent from the equation (3), $R(r)$ or NFP ($|R(r)|^2$) can not completely be inversely calculated. According to the present invention, NFP is inversely calculated from FFP measured in a range of ($0 \leqq \theta \leqq \theta$max) of finite radiation angles $\theta$, a measurement error is ascertained at the time the spot size $w_0$ has been determined, and the range of measurement of FFP is determined so that the measurement error of the spot size falls in an allowable range. The above process will be described with reference to Figures 3 and 4. Figure 3 shows the calculated values of FFP at the time a beam to be measured having a wavelength $\lambda=1.30$ μm is applied to a single-mode optical fiber having a specific refractive index difference $\Delta=0.3\%$ and a core diameter $R(r)$ according to the following scalar wave equation:

$$\frac{d^2R(r)}{dr^2} + \frac{1}{r}\frac{dR(r)}{dr} + [k^2n^2(r)-\beta^2]R(r)=0 \tag{4}$$

and determining $R(r)$ by the use of the above formula (2) to thereby obtain FFP ($|F(\theta)|^2$).

From Figure 3 the spot size $w_0$ is inversely calculated at the time $\theta$max in the FFP measurement range $0 \leqq \theta \leqq \theta$max is varied to various values. More specifically, $|F(\theta)|^2$ corresponding to a certain $\theta$ is determined from Figure 3, and $F(\theta)$ is determined from the determined $|F(\theta)|^2$. $R(r)$ is determined from the formula (3), and $|R(r)|^2$ is determined from the determined $R(r)$. $w_0$ is found by substituting the determined value for $|R(r)|^2$ in the formula (1). This procedure is carried out with respect to various values of $\theta$max.

A strict value $w_0'$ of the spot size can be obtained by determining $R(r)$ from the scalar wave equation (4), determining $|R(r)|^2$, and substituting the determined value for $|R(r)|^2$ in the formula (1).

Figure 4(b) shows $w_0$ plotted as spot size calculation errors (%) in comparison with the strict value $w_0'$ when $\theta$max is varied to various values. Figure 4(a) illustrates maximum values of the relative intensity of FFP at the time $\theta$max is varied to various values with respect to spot size calculation errors.

The spot size measurement error should normally be in the range of about ±2%, and, hence, the calculation error which will be produced in calculating inversely the spot size from FFP would be in the range of about ±2%. Figure 4(a) indicates that the error of calculation of the spot size can be reduced to ±2% or below by measuring FFP in a range from a radiation angle indicative of the maximum value of FFP to a radiation angle at which FFP is reduced 25 dB or smaller.

Figure 5 illustrates a measuring system utilizing the method of the present invention. The system includes a light source 12, an optical system 13, an optical fiber 14 to be measured, Ge-APD 15, a signal amplifier 16, and a computer 17. The light source 12 is preferably a laser beam source capable of emitting as high and stable an output as possible. In an example in which a semiconductor laser was used as the light source, a dynamic range of 36 dB could be achieved. The computer 17 determines $F(\theta)$ from FFP $|F(\theta)|^2$ in a range from the radiation angle indicative of the maximum value of FFP to a radiation angle at which FFP is reduced 25 dB or smaller, determines $R(r)$ from the formula (3), then determines $|R(r)|^2$ which is NFP, and calculates a spot size $w_0$ using the definition formula such as (1).

An example of measurement according to the present invention will be described. The table 1 shows, for comparison, the measured results according to the conventional method as shown in Figure 1(a) and the measured results according to the arrangement of the present invention. In the measurement, the spot size of a single-mode optical fiber was measured ten times by each of the methods, and average values of the spot size and standard deviations $\delta$ were determined. The table 1 clearly shows that the standard deviation $\delta$ according to the method of the invention can be reduced to about 1/2 through 1/4 of that according to the prior method, thus greatly reducing the measurement error.

# 0 141 251

TABLE 1

| Fiber | Measured results by the convention method | | Measured results by the method of the present invention |
|---|---|---|---|
| #1 | Average<br>δ | 4.85 μm<br>0.11 μm | 4.80 μm<br>0.04 μm |
| #2 | Average<br>δ | 5.27 μm<br>0.12 μm | 5.21 μm<br>0.03 μm |

The present invention does not employ an infrared vidicon camera having the problems of nonlinear photoelectric conversion characteristics and irregular vidicon sensitivity and also does not require the use of any lens system having aberrations. Therefore, the present invention can make highly accurate measurements. Since NFP is determined through a calculation, the method can be applied to any defining formula for the spot size.

Although the present invention has fully been described in connection with the preferred embodiment thereof with reference to the accompanying drawings, it is to be noted that various changes and modifications are apparent to those skilled in the art. Unless they depart from the scope of the present invention as defined by the appended claims, they should be construed as included therein.

## Claims

1. A method of measuring the spot size of a single-mode optical fiber, comprising the steps of measuring the far field pattern of a beam emitted from one end of the single-mode optical fiber in a range from the radiation angle, at which the far field pattern is maximum, to the radiation angle at which the far field pattern is reduced 25 dB or smaller, calculating the near field pattern from the measured far field pattern by the use of Hankel transform, and determining the spot size from the calculated near field pattern according to a prescribed definition formula.

2. A method according to Claim 1, wherein a semiconductor laser is used as a light source for measurement.

## Patentansprüche

1. Verfahren zum Messen der Lichtfleckgröße einer optischen Einmodusfaser, welche die folgenden Schritte enthält: Messen des fernen Feldmusters eines Strahls, der von einem Ende der optischen Einmodusfaser ausgestrahlt wird, in einem Bereich von dem Strahlungswinkel, bei dem das ferne Feldmuster ein Maximum ist, bis zum Strahlungswinkel, bei dem das ferne Feldmuster 25 dB reduziert oder kleiner ist, Berechnen des nahen Feldmusters aus dem gemessenen fernen Feldmuster durch die Anwendung der Hankel'schen Umformung, und Bestimmen der Fleckgröße aus dem berechneten nahen Feldmuster entsprechend einer vorgeschriebenen Definitionsformel.

2. Verfahren nach Anspruch 1, dadurch gekennzeichnet, daß ein Halbleiterlaser als Lichtquelle für die Messung verwendet wird.

## Revendications

1. Procédé de mesure de la dimension de la tache lumineuse d'une fibre optique monomode, comprenant les étapes de mesure du diagramme en champ lointain d'un faisceau émis par une extrémité de la fibre optique monomode dans une plage allant de l'angle de rayonnement pour lequel le diagramme en champ lointain est maximal à l'angle de rayonnement pour lequel le diagramme en champ lointain est réduit de 25 dB ou moins, de calcul du diagramme en champ proche à partir du diagramme mesuré en champ lointain à l'aide de la transformée de Hankel, et la détermination de la dimension de la tache lumineuse à partir du diagramme calculé en champ lointain suivant une formule prédéterminée de définition.

2. Procédé selon la revendication 1, dans lequel un laser à semi-conducteur est utilisé comme source lumineuse de mesure.

*Fig. 1(a)  Prior Art*

*Fig. 1(b)*

*Fig. 2*

1

Fig. 3

Fig. 5

0 141 251

Fig. 4(a)

Fig. 4(b)

FFP Meassuring Range Θmax (rad)

3